# EUROPÄISCHE PATENTSCHRIFT

(11) **EP 3 406 473 B1**
(45) Veröffentlichungstag und Bekanntmachung des Hinweises auf die Patenterteilung: **07.10.2020**
(21) Anmeldenummer: 18163257.1
(22) Anmeldetag: 22.03.2018
(51) Int. Cl.: B60K 1/00, F16H 3/00

(54) **ACHSANTRIEBSEINRICHTUNG FÜR EIN KRAFTFAHRZEUG SOWIE VERFAHREN ZUM BETREIBEN EINER ACHSANTRIEBSEINRICHTUNG**
AXLE DRIVE DEVICE FOR A MOTOR VEHICLE AND METHOD FOR OPERATING SAME
DISPOSITIF D'ENTRAÎNEMENT D'ESSIEU POUR UN VÉHICULE AUTOMOBILE AINSI QUE PROCÉDÉ DE FONCTIONNEMENT D'UN DISPOSITIF D'ENTRAÎNEMENT D'ESSIEU

(30) Priorität: 22.05.2017 DE 102017208633
(43) Veröffentlichungstag der Anmeldung: 28.11.2018
(73) Patentinhaber: AUDI AG, 85045 Ingolstadt (DE)
(72) Erfinder: Vollmer, Frank, 85049 Ingolstadt (DE); Brunner, Johannes, 86633 Neuburg an der Donau (DE); Störmer, Markus, 92334 Berching (DE); Jägle, Karl, 85051 Ingolstadt (DE); Hoffmann, Thomas, 93339 Riedenburg (DE)

(56) Entgegenhaltungen:
- DE-A1-102013 108 416
- DE-C- 353 025
- DE-C- 499 198
- US-A- 1 427 961

## Beschreibung

Die Erfindung betrifft eine Achsantriebseinrichtung für ein Kraftfahrzeug, mit mindestens einem Antriebsaggregat, das mit einer Eingangswelle eines das Antriebsaggregat mit einer Radachse wirkverbindenden Schaltgetriebes wirkverbunden ist. Die Erfindung betrifft weiterhin ein Verfahren zum Betreiben einer Achsantriebseinrichtung.

Die Achsantriebseinrichtung kann als Bestandteil des Kraftfahrzeugs Anwendung finden. Die Achsantriebseinrichtung dient dem Antreiben wenigstens eines Rads einer Radachse des Kraftfahrzeugs, vorzugsweise mehreren Rädern der Radachse. Mithilfe der Achsantriebseinrichtung kann insoweit ein auf das Antreiben des Kraftfahrzeugs gerichtetes Drehmoment bereitgestellt werden oder ist zumindest bereitstellbar. Die Achsantriebseinrichtung verfügt über das Antriebsaggregat, welches grundsätzlich beliebig ausgestaltet sein kann. Besonders bevorzugt liegt das Antriebsaggregat in Form einer elektrischen Maschine vor. Das Antriebsaggregat weist beispielsweise eine Antriebswelle auf, an welcher es ein Antriebsdrehmoment bereitstellt.

Das Antriebsaggregat ist über das Schaltgetriebe mit der Radachse oder zumindest einer Teilachse der Radachse wirkverbunden, insbesondere permanent wirkverbunden, oder zumindest wirkverbindbar. Die Wirkverbindung zwischen dem Antriebsaggregat und der Radachse liegt insoweit wenigstens zeitweise über das Schaltgetriebe vor. Das Schaltgetriebe verfügt über die Eingangswelle sowie über eine Ausgangswelle. Das Antriebsaggregat ist an die Eingangswelle angeschlossen, insbesondere starr und/oder permanent. Die Ausgangswelle des Schaltgetriebes hingegen ist mit der Radachse wirkverbunden, vorzugsweise ebenfalls starr und/oder permanent. Das Schaltgetriebe ist nun derart ausgestaltet, dass es zwischen seiner Eingangswelle und seiner Ausgangswelle eine aus mehreren unterschiedlichen Übersetzungen ausgewählte Übersetzung einstellt. Das Schaltgetriebe kann insoweit auch als Gangwechselgetriebe beziehungsweise Mehrganggetriebe ausgestaltet sein.

Aus dem Stand der Technik ist beispielsweise die Druckschrift DE 10 2013 108 416 A1 bekannt. Diese betrifft einen Elektroantrieb für ein Kraftfahrzeug, umfassend: einen Elektromotor zum Antreiben einer Antriebsachse des Kraftfahrzeugs, eine mit dem Elektromotor antriebsverbundene Getriebeeinheit und zumindest eine erste Ziehkeilvorrichtung, welche in einem ersten Leistungspfad zwischen dem Elektromotor und einem Abtriebsteil angeordnet ist und eine Drehmomentübertragung wahlweise herstellen oder unterbrechen kann. Die in der genannten Druckschrift beschriebene Vorgehensweise zum Gangwechseln der Getriebeeinheit verlangt jedoch nach einer aufwendigen Ausgestaltung des Elektroantriebs.

Die US 1 427 961 A weist eine gattungsgemäße Achsantriebseinrichtung, bzw. ein gattungsgemäßes Verfahren auf.

Es ist Aufgabe der Erfindung, eine Achsantriebseinrichtung für ein Kraftfahrzeug vorzuschlagen, welche gegenüber bekannten Achsantriebseinrichtungen Vorteile aufweist, insbesondere trotz einfacher und kostengünstiger Ausgestaltung einen flexiblen Einsatz, vorzugsweise über einen weiten Geschwindigkeitsbereich des Kraftfahrzeugs hinweg, ermöglicht.

Dies wird erfindungsgemäß mit einer Achsantriebseinrichtung für ein Kraftfahrzeug mit den Merkmalen des Anspruchs 1 erreicht. Dabei ist unter anderem vorgesehen,
dass das Schaltgetriebe als mehrgängiges Ziehkeilgetriebe ausgebildet ist, das einen Ziehkeil aufweist, der in unterschiedlichen Stellungen unterschiedliche Übersetzungen zwischen der Eingangswelle und einer Ausgangswelle des Schaltgetriebes einstellt, wobei der Ziehkeil mit einem Fliehkraftsteller verbunden ist, der den Ziehkeil in Abhängigkeit von einer Drehzahl der Eingangswelle verlagert.

Das Schaltgetriebe ist insoweit, wie bereits erläutert, derart ausgestaltet, dass es eine aus mehreren unterschiedlichen Übersetzungen ausgewählte Übersetzung zwischen der Eingangswelle und der Ausgangswelle und mithin zwischen dem Antriebsaggregat und der Radachse beziehungsweise dem wenigstens einen Rad der Radachse einstellt. Das Schaltgetriebe ist als Ziehkeilgetriebe ausgestaltet, weist also den Ziehkeil auf, welcher vorzugsweise in axialer Richtung bezüglich einer Drehachse der Eingangswelle oder der Ausgangswelle verlagerbar ist. In Abhängigkeit von der Stellung des Ziehkeils liegt eine bestimmte Übersetzung zwischen der Eingangswelle und der Ausgangswelle vor. Insoweit sind unterschiedlichen Stellungen des Ziehkeils unterschiedliche Übersetzungen zugeordnet, sodass bei Anordnung des Ziehkeils in einer der Stellungen die jeweils zugeordnete der Übersetzungen zwischen der Eingangswelle und der Ausgangswelle eingestellt ist.

Der Ziehkeil ist mit dem Fliehkraftsteller verbunden beziehungsweise wirkverbunden. Der Fliehkraftsteller dient der Verlagerung des Ziehkeils in Abhängigkeit von der Drehzahl, wobei als Drehzahl entweder die Drehzahl der Eingangswelle oder die Drehzahl der Ausgangswelle herangezogen werden kann. Sofern im Rahmen dieser Beschreibung allgemein von der Drehzahl die Rede ist, so ist unter dieser stets entweder die Drehzahl der Eingangswelle oder die Drehzahl der Ausgangswelle zu verstehen, sofern nicht auf anderes hingewiesen wird.

Der Fliehkraftsteller ist insbesondere der ausgestaltet, dass er in Abhängigkeit von der Drehzahl eine Kraft auf den Ziehkeil ausübt, welche auf eine Verlagerung des Ziehkeils gerichtet ist. Mit einer derartigen Ausgestaltung der Achsantriebseinrichtung kann auf besonders einfache Art und Weise das mehrgängige Schaltgetriebe beziehungsweise Ziehkeilgetriebe aktuiert werden. Insbesondere ist eine rein passive Aktuierung des Ziehkeilgetriebes realisiert, also ohne elektrischen und/oder hydraulischen Aktuator. Vielmehr wird die Aktuierung des Schaltgetriebes beziehungsweise das Einstellen der unterschiedlichen Übersetzungen zwischen der Eingangswelle und der Ausgangswelle allein mittels des Fliehkraftstellers bewirkt.

Der Fliehkraftsteller ist hierzu mit der Eingangswelle oder der Ausgangswelle gekoppelt, insbesondere starr und/oder permanent. Das bedeutet, dass ein Fliehkraftelement des Fliehkraftstellers drehfest mit der jeweiligen Welle verbunden ist, je nachdem, in Abhängigkeit von welcher Drehzahl, also der Drehzahl der Eingangswelle oder Drehzahl der Ausgangswelle, das Einstellen der Übersetzung erfolgen soll. Bei unterschiedlichen Drehzahlen der jeweiligen Welle wird das Fliehkraftelement mit unterschiedlichen Zentrifugalkräften beaufschlagt. Der Fliehkraftsteller ist derart ausgestaltet, dass die Zentrifugalkraft auf das Fliehkraftelement in eine auf den Ziehkeil wirkende Kraft, insbesondere eine axiale Kraft, umgesetzt wird. Hierzu ist beispielsweise eine Hebelanordnung oder dergleichen in der Wirkverbindung zwischen dem Fliehkraftelement und dem Ziehkeil realisiert.

Eine weitere Ausgestaltung der Erfindung sieht vor, dass auf der Eingangswelle ein erstes Antriebszahnrad und ein zweites Antriebszahnrad gelagert sind, wobei der Ziehkeil in einer ersten der Stellungen das erste Antriebszahnrad mit der Eingangswelle drehfest koppelt und das zweite Antriebszahnrad von der Eingangswelle entkoppelt und in einer zweiten der Stellungen das zweite Antriebszahnrad mit der Eingangswelle drehfest koppelt und das erste Antriebszahnrad von der Eingangswelle entkoppelt. So kann eine besonders platzsparende Ausgestaltung des Ziehkeilgetriebes realisiert werden.

Vorzugsweise ist das Schaltgetriebe beziehungsweise Ziehkeilgetriebe als Zweiganggetriebe ausgestaltet, ermöglicht also lediglich das Einstellen einer aus genau zwei Übersetzungen ausgewählten Übersetzung. Auf der Eingangswelle sind hierzu zumindest das erste Antriebszahnrad und das zweite Antriebszahnrad grundsätzlich drehbar gelagert, vorzugsweise lediglich das erste Antriebszahnrad und das zweite Antriebszahnrad. Der Ziehkeil ist nun derart ausgestaltet, dass er jedes der Antriebszahnräder bezüglich der Eingangswelle festsetzen kann, jedoch stets das dann andere Antriebszahnrad freigibt beziehungsweise von der Eingangswelle entkoppelt. Das bedeutet, dass der Ziehkeil stets entweder das erste Antriebszahnrad oder das zweite Antriebszahnrad mit der Eingangswelle drehfest verbindet und das jeweils andere Antriebszahnrad freigibt.

Eine weitere Ausgestaltung der Erfindung sieht vor, dass das erste Antriebszahnrad mit einem ersten Abtriebszahnrad und das zweite Antriebszahnrad mit einem zweiten Abtriebszahnrad kämmt, wobei das erste Abtriebszahnrad und das zweite Abtriebszahnrad permanent mit der Ausgangswelle gekoppelt sind. Mittels des ersten Antriebszahnrads und des ersten Abtriebszahnrads ist eine erste Übersetzung und mittels des zweiten Antriebszahnrads und des zweiten Abtriebszahnrads eine zweite Übersetzung realisiert, wobei die beiden Übersetzungen voneinander verschieden sind. Das erste Antriebszahnrad kämmt permanent mit dem ersten Abtriebszahnrad und das zweite Antriebszahnrad permanent mit dem zweiten Abtriebszahnrad. Die beiden Abtriebszahnräder, also das erste Abtriebszahnrad und das zweite Abtriebszahnrad, sind permanent mit der Ausgangswelle gekoppelt, also drehfest mit ihr verbunden. Somit sind auf einfache Art und Weise unterschiedliche Übersetzungen realisierbar.

Eine Weiterbildung der Erfindung sieht vor, dass das Ziehkeilgetriebe derart ausgestaltet ist, dass der Ziehkeil bei höherer Drehzahl eine geringere Übersetzung einstellt. Der Fliehkraftsteller des Ziehkeilgetriebes drängt insoweit den Ziehkeil bei einer niedrigeren ersten Drehzahl in eine erste Stellung und bei einer höheren zweiten Drehzahl in eine zweite Stellung, wobei in der zweiten Stellung des Ziehkeils eine geringere Übersetzung eingestellt ist als in der ersten Stellung. Entsprechend kann mittels der Achsantriebseinrichtung bei niedrigeren Drehzahlen ein höheres Drehmoment an der Radachse bereitgestellt werden als in der zweiten Stellung, wohingegen in der zweiten Stellung eine höhere Drehzahl der Radachse beziehungsweise der Ausgangswelle des Schaltgetriebes realisiert werden kann als in der ersten Stellung.

Eine bevorzugte weitere Ausführungsform der Erfindung sieht vor, dass der Ziehkeil mittels eines Federelements federkraftbeaufschlagt ist, wobei die Federkraft den Ziehkeil in eine der Stellungen drängt, in der er eine bestimmte Übersetzung einstellt. Der Ziehkeil ist mit dem Federelement wirkverbunden, beispielsweise greift das Federelement einerseits an den Ziehkeil an und stützt sich andererseits an einem Element des Ziehkeilgetriebes ab, beispielsweise an einer Innenstirnfläche der Eingangswelle des Schaltgetriebes. In diesem Fall ist die Eingangswelle als Hohlwelle ausgestaltet, wobei der Ziehkeil in der Hohlwelle angeordnet ist.

Die mittels des Federelements bewirkt Federkraft drängt den Ziehkeil in Richtung einer der Stellungen, insbesondere in diese hinein. In der Stellung stellt der Ziehkeil eine bestimmte Übersetzung ein, setzt also ein bestimmtes der Antriebszahnräder bezüglich der Eingangswelle fest. Die Federkraft des Federelements wirkt der von dem Fliehkraftsteller auf den Ziehkeil bewirkten Kraft entgegen, bewirkt also insoweit eine dieser Kraft entgegengerichtete Gegenkraft. Somit wird vorteilhaft stets eine definierte Übersetzung eingestellt.

Eine weitere Ausgestaltung der Erfindung sieht vor, dass die bestimmte Übersetzung eine größte Übersetzung ist. Beispielsweise drängt das Federelement den Ziehkeil in Richtung eines Endanschlags. Liegt der Ziehkeil an dem Endanschlag an, so stellt er die größte Übersetzung des Schaltgetriebes zwischen der Eingangswelle und der Ausgangswelle ein. Unter der größten Übersetzung ist die größtmögliche Übersetzung des Schaltgetriebes zu verstehen. Dies ermöglicht stets das Bereitstellen eines ausreichenden Drehmoments an der Radachse mittels des Antriebsaggregats.

Im Rahmen einer weiteren Ausführungsform der Erfindung kann vorgesehen sein, dass das Ziehkeilgetriebe ausschließlich lastfrei schaltbar ist. Das bedeutet, dass eine Verlagerung des Ziehkeils mittels des Fliehkraftstellers ausschließlich möglich ist, wenn das Ziehkeilgetriebe in einem lastfreien Zustand vorliegt, also kein oder lediglich ein geringes Drehmoment unterhalb eines bestimmten Grenzdrehmoments zwischen der Eingangswelle und der Ausgangswelle übertragen wird. Insbesondere ist das Ziehkeilgetriebe derart ausgestaltet, dass die Verlagerung des Ziehkeils erst dann beziehungsweise nur dann erfolgt, sobald beziehungsweise sofern das zwischen der Eingangswelle und der Ausgangswelle übertragene Drehmoment kleiner ist als das bestimmte Grenzdrehmoment.

Beispielsweise ist es vorgesehen, dass bei Vorliegen eines Drehmoments, insbesondere eines das Grenzdrehmoment überschreitenden Drehmoments, dasjenige Antriebszahnrad, welches der Ziehkeil derzeit mit der Eingangswelle drehfest koppelt, den Ziehkeil kraftschlüssig in axialer Richtung festsetzt, nämlich aufgrund des übertragenen Drehmoments. Insoweit verklemmt das Antriebszahnrad den Ziehkeil mit der Eingangswelle, sofern ein Drehmoment übertragen wird, welches größer ist als das Grenzdrehmoment oder diesem zumindest entspricht. Auf zusätzliche Mittel zum Festsetzen des Ziehkeils kann bei einer derartigen Ausgestaltung verzichtet werden.

Eine bevorzugte Weiterbildung der Erfindung sieht vor, dass die Ausgangswelle unmittelbar oder mittelbar über wenigstens eine Getriebestufe mit einer Differentialeingangswelle eines Achsdifferentialgetriebes gekoppelt ist. Das Achsdifferentialgetriebe ist Bestandteil der Achsantriebseinrichtung. Das Achsdifferentialgetriebe weist die Differentialeingangswelle sowie mehrere Differentialausgangswellen auf. Die Differentialausgangswellen sind mit den Radachsen wirkverbunden, wohingegen die Differentialeingangswelle an die Ausgangswelle des Ziehkeilgetriebes angeschlossen ist, vorzugsweise starr und/oder permanent.

Das Koppeln der Differentialeingangswelle mit der Ausgangswelle kann entweder unmittelbar oder lediglich mittelbar erfolgen. Bei der unmittelbaren Kopplung ist die Ausgangswelle direkt an die Differentialeingangswelle angeschlossen, nämlich insbesondere derart, dass sie stets dieselbe Drehzahl aufweisen. Im Falle der mittelbaren Kopplung liegt zwischen der Ausgangswelle und der Differentialeingangswelle die wenigstens eine Getriebestufe vor, welche eine Drehzahlübersetzung realisiert. Liegt die Getriebestufe vor, so weisen die Ausgangswelle und Differentialeingangswelle stets ein bestimmtes Drehzahlverhältnis zueinander auf, zumindest sofern ihre Drehzahlen größer als null sind.

Schließlich kann im Rahmen einer weiteren Ausführungsform der Erfindung vorgesehen sein, dass Differentialausgangswellen des Schaltgetriebes mit Teilachsen der Radachsen gekoppelt sind. Hierauf wurde vorstehend bereits hingewiesen. Die Radachse weist die Teilachsen, insbesondere zwei Teilachsen, auf. Die Teilachsen sind über das Achsdifferentialgetriebe sowohl miteinander als auch mit der Differentialeingangswelle gekoppelt, insbesondere permanent. An jeder der Teilachsen ist vorzugsweise wenigstens ein Rad des Kraftfahrzeugs angeordnet beziehungsweise zumindest mit der jeweiligen Teilachsen wirkverbunden, nämlich vorzugsweise starr und/oder permanent.

Die Erfindung betrifft weiterhin ein Verfahren, gemäß Anspruch 10, zum Betreiben einer Achsantriebseinrichtung für ein Kraftfahrzeug, insbesondere einer Achsantriebseinrichtung gemäß den vorstehenden Ausführungen, wobei unter anderem die Achsantriebseinrichtung mindestens ein Antriebsaggregat aufweist, das mit einer Eingangswelle eines das Antriebsaggregat mit einer Radachse wirkverbindenden Schaltgetriebes wirkverbunden ist. Dabei ist vorgesehen, dass das Schaltgetriebe als mehrgängiges Ziehkeilgetriebe ausgebildet ist, das einen Ziehkeil aufweist, der in unterschiedlichen Stellungen unterschiedliche Übersetzungen zwischen der Eingangswelle und einer Ausgangswelle des Schaltgetriebes einstellt, wobei der Ziehkeil mit einem Fliehkraftsteller verbunden ist, der den Ziehkeil in Abhängigkeit von einer Drehzahl der Eingangswelle verlagert. Auf die Vorteile einer derartigen Ausgestaltung der Achsantriebseinrichtung beziehungsweise einer derartigen Vorgehensweise wurde bereits hingewiesen. Sowohl die Achsantriebseinrichtung als auch das Verfahren zu ihrem Betreiben können gemäß den vorstehenden Ausführungen weitergebildet sein, sodass insoweit auf diese verwiesen wird.

Es ist vorgesehen, dass ein Wechsel zwischen den Übersetzungen durch eine entsprechende Ansteuerung des Antriebsaggregats realisiert wird, insbesondere falls das Ziehkeilgetriebe ausschließlich lastfrei schaltbar ist. In diesem Fall wird bei einer von dem Fliehkraftsteller auf den Ziehkeil bewirkten Kraft, welche bei lastfreiem Zustand des Schaltgetriebes zu einem Wechsel der Übersetzung führen würde, das Antriebsaggregat derart angesteuert, dass das Schaltgetriebe lastfrei ist. Entsprechend kann der Ziehkeil verlagert werden und eine andere Übersetzung einstellen. Nachfolgend wird das Antriebsaggregat erneut derart angesteuert, dass ein Drehmoment über das Schaltgetriebe übertragen wird, insbesondere ein Drehmoment, welches den Ziehkeil in axialer Richtung festsetzt.

In anderen Worten ist es zunächst vorgesehen, das Antriebsaggregat derart zu betreiben, dass der Ziehkeil in axialer Richtung aufgrund des über das Schaltgetriebe übertragenen Drehmoments festgesetzt ist. Entsprechend wird die Übersetzung auch bei einer Drehzahl der Eingangswelle beziehungsweise der Ausgangswelle nicht gewechselt, welche bei lastfreiem Zustand des Schaltgetriebes bereits einen Wechsel der Übersetzung herbeiführen würde. Ein solcher Wechsel der Übersetzung wird schlussendlich erst durch das Lastfreischalten des Schaltgetriebes durch die entsprechende Ansteuerung des Antriebsaggregats bewirkt. Nach dem Wechsel der Übersetzung durch die entsprechende Ansteuerung des Antriebsaggregats wird dieses erneut derart angesteuert, dass der Ziehkeil in axialer Richtung festgesetzt ist.

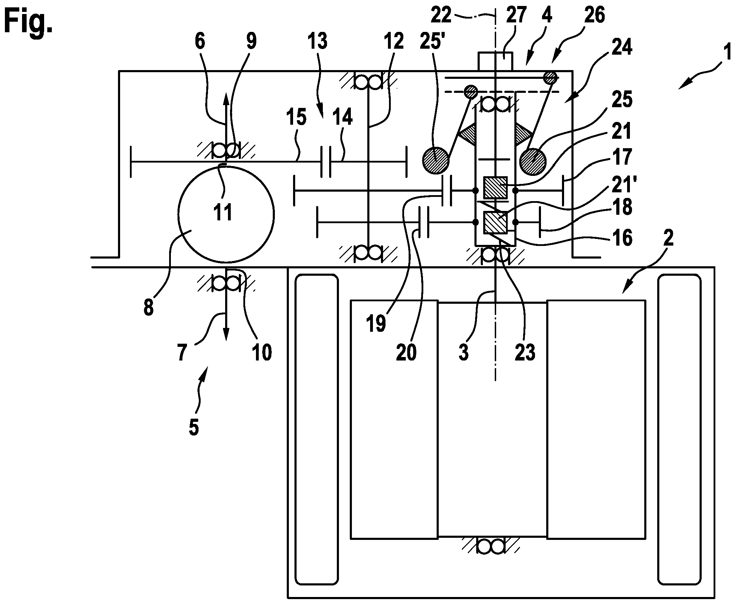

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur: eine schematische Darstellung einer Achsantriebseinrichtung für ein Kraftfahrzeug.

Die Figur zeigt eine schematische Darstellung einer Achsantriebseinrichtung 1 für ein Kraftfahrzeug. Die Antriebseinrichtung 1 verfügt über ein Antriebsaggregat 2, welches in dem hier dargestellten Ausführungsbeispiel als elektrische Maschine ausgestaltet ist. Das Antriebsaggregat 2 verfügt über eine Antriebswelle 3, an welcher es ein Antriebsdrehmoment bereitstellen kann. Zusätzlich zu dem Antriebsaggregat 2 verfügt die Achsantriebseinrichtung 1 über ein Schaltgetriebe 4, über welches das Antriebsaggregat 2 mit einer Radachse 5 verbunden oder zumindest verbindbar ist.

Die Radachse 5 weist zwei Teilachsen 6 und 7 auf, wobei die Teilachsen 6 und 7 über ein Achsdifferentialgetriebe 8 mit dem Schaltgetriebe 4 gekoppelt sind. Die Teilachsen 6 und 7 sind insoweit an Differentialausgangswellen 9 und 10 des Achsdifferentialgetriebes 8 angeschlossen beziehungsweise mit diesen gekoppelt, insbesondere starr und/oder permanent. Eine Differenzialeingangswelle 11 des Achsdifferentialgetriebes 8 hingegen ist mit einer Ausgangswelle 12 des Schaltgetriebes 4 gekoppelt, entweder unmittelbar oder - wie in dem dargestellten Ausführungsbeispiel - mittelbar über eine Getriebestufe 13, die ein mit der Ausgangswelle 12 gekoppeltes erstes Zahnrad 14 und ein mit der Differenzialeingangswelle 11 gekoppeltes zweites Zahnrad 15 aufweist. Eine Eingangswelle 16 des Schaltgetriebes 4 hingegen ist mit der Antriebswelle 3 des Antriebsaggregats 2 gekoppelt, vorzugsweise starr und/oder permanent.

Auf der Eingangswelle 16 des Schaltgetriebes 4 sind ein erstes Antriebszahnrad 17 sowie ein zweites Antriebszahnrad 18 gelagert, insbesondere drehbar gelagert. Das erste Antriebszahnrad 17 kämmt permanent mit einem ersten Abtriebszahnrad 19 und das zweite Antriebszahnrad 18 permanent mit einem zweiten Abtriebszahnrad 20. Die beiden Abtriebszahnräder 19 und 20 sind mit der Ausgangswelle 12 gekoppelt, insbesondere auf dieser angeordnet und vorzugsweise starr und/oder permanent mit ihr wirkverbunden.

Das Schaltgetriebe 4 ist als Ziehkeilgetriebe ausgestaltet und weist insoweit einen Ziehkeil 21 beziehungsweise 21' auf, der in zwei unterschiedlichen Stellungen anordenbar ist, wobei die unterschiedlichen Bezugszeichen den Ziehkeil 21 beziehungsweise 21' in unterschiedlichen Stellungen bezeichnen. In der ersten Stellung koppelt der Ziehkeil 21 das erste Antriebszahnrad 17 drehfest mit der Eingangswelle 16, wohingegen er das zweite Antriebszahnrad 18 von der Eingangswelle 16 entkoppelt. In seiner zweiten Stellung koppelt der Ziehkeil 21' hingegen das zweite Antriebszahnrad 18 drehfest mit der Eingangswelle 16 und entkoppelt das erste Antriebszahnrad 17 von dieser. Entsprechend sind in den beiden unterschiedlichen Stellungen des Ziehkeils 21 beziehungsweise 21' unterschiedliche Übersetzungen des Schaltgetriebes 4 beziehungsweise Ziehkeilgetriebes zwischen der Eingangswelle 16 und Ausgangswelle 12 eingestellt.

Der Ziehkeil 21 beziehungsweise 21' ist in axialer Richtung bezüglich einer Drehachse 22 der Eingangswelle 16 verlagerbar. Er ist vorzugsweise mittels eines Federelements 23 federkraftbeaufschlagt, welches ihn in Richtung einer der Stellungen des Ziehkeils 21 beziehungsweise 21' drängt. Beispielsweise ist es vorgesehen, dass die von dem Federelement 23 bewirkte Kraft den Ziehkeil 21 beziehungsweise 21' - wie hier angedeutet - in Richtung der ersten Stellung drängt. Bevorzugt ist es jedoch vorgesehen, dass das Federelement 23 beziehungsweise die von ihm bewirkte Federkraft den Ziehkeil 21 beziehungsweise 21' in Richtung einer der Stellungen drängt, in welcher die größte Übersetzung vorliegt, also in dem hier dargestellten Ausführungsbeispiel die zweite Stellung.

Der Ziehkeil 21 beziehungsweise 21' ist mit einem Fliehkraftsteller 24 verbunden, der den Ziehkeil 21 beziehungsweise 21' in Abhängigkeit von einer Drehzahl der Eingangswelle 16 in axialer Richtung verlagert. Der Fliehkraftsteller 24 weist wenigstens ein Fliehkraftelement 25 beziehungsweise 25' auf, welches hier in zwei unterschiedlichen Stellungen angedeutet ist, wobei die unterschiedlichen Stellungen durch die unterschiedlichen Bezugszeichen gekennzeichnet sind. In einer bei einer geringeren Drehzahl vorliegenden Stellung ist das Fliehkraftelement mit dem Bezugszeichen 25 und in einer bei höheren Drehzahlen vorliegenden zweiten Stellung mit dem Bezugszeichen 25' gekennzeichnet.

Es wird deutlich, dass das Fliehkraftelement 25 beziehungsweise 25' in radialer Richtung verlagerbar an der Eingangswelle 16 gelagert ist. Es ist über eine Hebelanordnung 26 mit dem Ziehkeil 21 wirkverbunden, wobei die Hebelanordnung 26 derart ausgestaltet ist, dass sie eine radiale Verlagerung des Fliehkraftelements 25 beziehungsweise 25' in eine axiale Verlagerung des Ziehkeils 21 beziehungsweise 21' umsetzt. Mithilfe des Fliehkraftstellers 24 ist eine rein passive Aktuierung des Schaltgetriebes 4 realisiert. Es ist insoweit kein elektrischer und/oder hydraulischer Aktuator zur Betätigung des Schaltgetriebes 4 vorgesehen. Auf diese Art und Weise kann eine Achsantriebseinrichtung 1 realisiert werden, welche den Vorteil eines mehrgängigen Schaltgetriebes 4 bietet, jedoch äußerst kostengünstig umsetzbar ist.

Weiterhin kann eine optionale Halteeinrichtung 27 vorliegen, mittels welcher der Ziehkeil 21 in einer seiner Stellungen festsetzbar ist. Die Halteeinrichtung 27 liegt beispielsweise in Form einer elektrischen Halteeinrichtung vor und weist insoweit einen elektrischen Aktuator zum Festsetzen und Freigeben des Ziehkeils 21 auf. Mithilfe der Halteeinrichtung 27 kann ein definierter Schaltzeitpunkt vorgegeben beziehungsweise ein Schalten zu einem definierten Zeitpunkt erzielt werden.

## Patentansprüche

1. Achsantriebseinrichtung (1) für ein Kraftfahrzeug, mit mindestens einem Antriebsaggregat (2), das mit einer Eingangswelle (16) eines das Antriebsaggregat (2) mit einer Radachse (5) verbindenden Schaltgetriebes (4) wirkverbunden ist, wobei das Schaltgetriebe (4) als mehrgängiges Ziehkeilgetriebe ausgebildet ist, das einen Ziehkeil (21,21') aufweist, der in unterschiedlichen Stellungen unterschiedliche Übersetzungen zwischen der Eingangswelle (16) und einer Ausgangswelle (12) des Schaltgetriebes (4) einstellt, wobei der Ziehkeil (21,21') mit einem Fliehkraftsteller (24) verbunden ist, **dadurch gekennzeichnet, dass** der Fliehkraftsteller (24) den Ziehkeil (21,21') in Abhängigkeit von einer Drehzahl der Eingangswelle (16) verlagert, wobei der Fliehkraftsteller (24) wenigstens ein in radialer Richtung verlagerbar an der Eingangswelle (16) gelagertes Fliehkraftelement (25,25') aufweist, das über eine Hebelanordnung (26) mit dem Ziehkeil (21,21') wirkverbunden ist.

2. Achsantriebseinrichtung nach Anspruch 1, **dadurch gekennzeichnet, dass** auf der Eingangswelle (16) ein erstes Antriebszahnrad (17) und ein zweites Antriebszahnrad (18) gelagert sind, wobei der Ziehkeil (21,21') in einer ersten der Stellungen das erste Antriebszahnrad (17) mit der Eingangswelle (16) drehfest koppelt und das zweite Antriebszahnrad (18) von der Eingangswelle (16) entkoppelt und in einer zweiten der Stellungen das zweite Antriebszahnrad (18) mit der Eingangswelle (16) drehfest koppelt und das erste Antriebszahnrad (17) von der Eingangswelle (16) entkoppelt.

3. Achsantriebseinrichtung nach einem der vorhergehenden Ansprüche, **dadurch gekennzeichnet, dass** das erste Antriebszahnrad (17) mit einem ersten Abtriebszahnrad (19) und das zweite Antriebszahnrad (18) mit einem zweiten Abtriebszahnrad (20) kämmt, wobei das erste Abtriebszahnrad (19) und das zweite Abtriebszahnrad (20) permanent mit der Ausgangswelle (12) gekoppelt sind.

4. Achsantriebseinrichtung nach einem der vorhergehenden Ansprüche, **dadurch gekennzeichnet, dass** das Ziehkeilgetriebe derart ausgestaltet ist, dass der Ziehkeil (21,21') bei höherer Drehzahl eine kleinere Übersetzung einstellt.

5. Achsantriebseinrichtung nach einem der vorhergehenden Ansprüche, **dadurch gekennzeichnet, dass** der Ziehkeil (21,21') mittels eines Federelements (23) federkraftbeaufschlagt ist, wobei die Federkraft den Ziehkeil (21,21') in eine der Stellungen drängt, in der er eine bestimmte Übersetzung einstellt.

6. Achsantriebseinrichtung nach Anspruch 5, **dadurch gekennzeichnet, dass** die bestimmte Übersetzung eine größte Übersetzung ist.

7. Achsantriebseinrichtung nach einem der vorhergehenden Ansprüche, **dadurch gekennzeichnet, dass** das Ziehkeilgetriebe ausschließlich lastfrei schaltbar ist, wobei die Verlagerung des Ziehkeils erst erfolgt, sobald das zwischen der Eingangswelle (16) und der Ausgangswelle (12) übertragene Drehmoment kleiner ist als ein Grenzdrehmoment.

8. Achsantriebseinrichtung nach einem der vorhergehenden Ansprüche, **dadurch gekennzeichnet, dass** die Ausgangswelle (12) unmittelbar oder mittelbar über wenigstens eine Getriebestufe (13) mit einer Differentialeingangswelle (11) eines Achsdifferentialgetriebes (8) gekoppelt ist.

9. Achsantriebseinrichtung nach einem der vorhergehenden Ansprüche, **dadurch gekennzeichnet, dass** Differentialausgangswellen (9,10) des Achsdifferentialgetriebes (8) mit Teilachsen (6,7) der Radachse (5) gekoppelt sind.

10. Verfahren zum Betreiben einer Achsantriebseinrichtung (1) für ein Kraftfahrzeug, insbesondere einer Achsantriebseinrichtung (1) nach einem oder mehreren der vorhergehenden Ansprüche, wobei die Achsantriebseinrichtung (1) mindestens ein Antriebsaggregat (2) aufweist, das mit einer Eingangswelle (16) eines das Antriebsaggregat (2) mit einer Radachse (5) wirkverbindenden Schaltgetriebes (4) wirkverbunden ist, wobei das Schaltgetriebe (4) als mehrgängiges Ziehkeilgetriebe ausgebildet ist, das einen Ziehkeil (21,21') aufweist, der in unterschiedlichen Stellungen unterschiedliche Übersetzungen zwischen der Eingangswelle (16) und einer Ausgangswelle (12) des Schaltgetriebes (4) einstellt, wobei der Ziehkeil (21,21') mit einem Fliehkraftsteller (24) verbunden ist, **dadurch gekennzeichnet, dass** der Fliehkraftsteller (24) den Ziehkeil (21,21') in Abhängigkeit von einer Drehzahl der Eingangswelle (16) verlagert, wobei der Fliehkraftsteller (24) wenigstens ein in radialer Richtung verlagerbar an der Eingangswelle (16) gelagertes Fliehkraftelement (25,25') aufweist, das über eine Hebelanordnung (26) mit dem Ziehkeil (21,21') wirkverbunden ist, und wobei ein Wechsel zwischen den Übersetzungen durch ein Ansteuern des Antriebsaggregats (2) derart erfolgt, dass das Schaltgetriebe (4) lastfrei ist.

## Claims

1. Axle drive apparatus (1) for a motor vehicle, having at least one drive unit (2), which is operatively connected to an input shaft (16) of a gearbox (4) connecting the drive unit (2) to a wheel axle (5), wherein the gearbox (4) is designed as a multi-speed linear cam gearbox, which has a linear cam (21,21'), which sets different ratios between the input shaft (16) and an output shaft (12) of the gearbox (4) in different positions, wherein the linear cam (21,21') is connected to a centrifugal governor (24), **characterised in that** the centrifugal governor displaces the linear cam (21,21') as a function of a rotational speed of the input shaft (16), wherein the centrifugal governor (24) has at least one centrifugal force element (25,25'), which can be displaced in a radial direction, mounted on the input shaft (16), which is operatively connected to the linear cam (21,21') via a lever assembly (26).

2. Axle drive apparatus according to claim 1, **characterised in that** a first drive gearwheel (17) and a second drive gearwheel (18) are mounted on the input shaft (16), wherein, in a first position, the linear cam (21,21') couples the first drive gearwheel (17) non-rotatably with the input shaft (16) and decouples the second drive gearwheel (18) from the input shaft (16) and, in a second position, couples the second drive gearwheel (18) non-rotatably with the input shaft (16) and decouples the first drive gearwheel (17) from the input shaft (16).

3. Axle drive apparatus according to any of the preceding claims, **characterised in that** the first drive gearwheel (17) meshes with a first output gearwheel (19) and the second drive gearwheel (18) meshes with a second output gearwheel (20), wherein the first output gearwheel (19) and the second output gearwheel (20) are permanently coupled with the output shaft (12).

4. Axle drive apparatus according to any of the preceding claims, **characterised in that** the linear cam gearbox is designed such that the linear cam (21,21') sets a lower ratio at a higher rotational speed.

5. Axle drive apparatus according to any of the preceding claims, **characterised in that** the linear cam (21,21') is spring-loaded by means of a spring element (23), wherein the spring force pushes the linear cam (21,21') into a position, in which it sets a specific ratio.

6. Axle drive apparatus according to claim 5, **characterised in that** the specific ratio is a highest ratio.

7. Axle drive apparatus according to any of the preceding claims, **characterised in that** the linear cam gearbox can only be switched without load, wherein the displacement of the linear cam only takes place when the torque transmitted between the input shaft (16) and the output shaft (12) is below a limit torque.

8. Axle drive apparatus according to any of the preceding claims, **characterised in that** the output shaft (12) is directly or indirectly coupled via at least one transmission stage (13) with a differential input shaft (11) of an axle differential gear (8).

9. Axle drive apparatus according to any of the preceding claims, **characterised in that** the differential output shafts (9,10) of the axle differential gear (8) are coupled with partial axles (6,7) of the wheel axle (5).

10. Method for operating an axle drive apparatus (1) for a motor vehicle, in particular an axle drive apparatus (1) according to one or more of the preceding claims, wherein the axle drive apparatus (1) has at least one drive unit (2), which is operatively connected to an input shaft (16) of a gearbox (4) operatively connecting the drive unit (2) to a wheel axle (5), wherein the gearbox (4) is designed as a multi-speed linear cam gearbox, which has a linear cam (21,21'), which sets different ratios between the input shaft (16) and an output shaft (12) of the gearbox (4) in different positions, wherein the linear cam (21,21') is connected to a centrifugal governor (24), **characterised in that** the centrifugal governor (24) displaces the linear cam (21,21') as a function of a rotational speed of the input shaft (16), wherein the centrifugal governor (24) has at least one centrifugal force element (25,25'), which can be displaced in a radial direction, mounted on the input shaft (16), which is operatively connected to the linear cam (21,21') via a lever assembly (26), and wherein a change between the ratios takes place by means of an actuation of the drive unit (2) such that the gearbox (4) is without load.

## Revendications

1. Appareil d'entraînement d'axe (1) pour un véhicule automobile, avec au moins un groupe d'entraînement (2), qui est en liaison active avec un arbre d'entrée (16) d'une boîte de vitesses (4) reliant le groupe d'entraînement (2) à un axe de roue (5), dans lequel la boîte de vitesses (4) est réalisée en tant que transmission à clavette mobile à plusieurs vitesses, qui présente une clavette mobile (21, 21'), qui règle dans différentes positions différents rapports entre l'arbre d'entrée (16) et un arbre de sortie (12) de la boîte de vitesses (4), dans lequel la clavette mobile (21, 21') est reliée à un régleur de force centrifuge (24), **caractérisé en ce que** le régleur de force centrifuge (24) déplace la clavette mobile (21, 21') en fonction d'une vitesse de rotation de l'arbre d'entrée (16), dans lequel le régleur de force centrifuge (24) présente au moins un élément de force centrifuge (25, 25') déplaçable dans la direction radiale logé au niveau de l'arbre d'entrée (16), qui est en liaison active avec la clavette mobile (21, 21') par le biais d'un ensemble levier (26).

2. Appareil d'entraînement d'axe selon la revendication 1, **caractérisé en ce qu'**une première roue dentée d'entrainement (17) et une deuxième roue dentée d'entraînement (18) sont logées sur l'arbre d'entrée (16), dans lequel la clavette mobile (21, 21') couple solidaire en rotation dans une première des positions la première roue dentée d'entrainement (17) avec l'arbre d'entrée (16) et découple la deuxième roue dentée d'entraînement (18) de l'arbre d'entrée (16) et couple solidaire en rotation dans une deuxième des positions, la deuxième roue dentée d'entrainement (18) avec l'arbre d'entrée (16) et découple la première roue dentée d'entrainement (17) de l'arbre d'entrée (16).

3. Appareil d'entraînement d'axe selon l'une quelconque des revendications précédentes, **caractérisé en ce que** la première roue dentée d'entrainement (17) s'engrène avec une première roue dentée de sortie (19) et la deuxième roue dentée d'entraînement (18) s'engrène avec une deuxième roue dentée de sortie (20), dans lequel la première roue dentée de sortie (19) et la deuxième roue dentée de sortie (20) sont couplées de manière permanente avec l'arbre de sortie (12).

4. Appareil d'entraînement d'axe selon l'une quelconque des revendications précédentes, **caractérisé en ce que** la transmission à clavette mobile est configurée de sorte que la clavette mobile (21, 21') règle un rapport plus petit en cas de vitesse de rotation plus élevée.

5. Appareil d'entraînement d'axe selon l'une quelconque des revendications précédentes, **caractérisé en ce que** la clavette mobile (21, 21') est sollicitée par force ressort au moyen d'un élément formant ressort (23), dans lequel la force ressort contraint la clavette mobile (21, 21') dans une des positions, dans laquelle il règle un rapport déterminé.

6. Appareil d'entraînement d'axe selon la revendication 5, **caractérisé en ce que** le rapport déterminé est un rapport le plus grand.

7. Appareil d'entraînement d'axe selon l'une quelconque des revendications précédentes, **caractérisé en ce que** la transmission à clavette mobile est commutable exclusivement sans charge, dans lequel le déplacement de la clavette mobile a lieu dès que le couple transmis entre l'arbre d'entrée (16) et l'arbre de sortie (12) est inférieur à un couple limite.

8. Appareil d'entraînement d'axe selon l'une quelconque des revendications précédentes, **caractérisé en ce que** l'arbre de sortie (12) est couplé directement ou indirectement par le biais d'au moins une boîte de transmission (13) avec un arbre d'entrée différentielle (11) d'une transmission différentielle d'axe (8).

9. Appareil d'entraînement d'axe selon l'une quelconque des revendications précédentes, **caractérisé en ce que** des arbres de sortie différentielle (9, 10) de la transmission différentielle d'axe (8) sont couplés avec des axes partiels (6, 7) de l'axe de roue (5).

10. Procédé de fonctionnement d'un appareil d'entraînement d'axe (1) pour un véhicule automobile, en particulier d'un appareil d'entraînement d'axe (1) selon l'une quelconque ou plusieurs des revendications précédentes, dans lequel l'appareil d'entraînement d'axe (1) présente au moins un groupe d'entraînement (2), qui est en liaison active avec un arbre d'entrée (16) d'une boîte de vitesses (4) reliant le groupe d'entraînement (2) à un axe de roue (5), dans lequel la boîte de vitesses (4) est réalisée en tant que transmission à clavette mobile à plusieurs vitesses, qui présente une clavette mobile (21, 21'), qui règle dans différentes positions différents rapports entre l'arbre d'entrée (16) et un arbre de sortie (12) de la boîte de vitesses (4), dans lequel la clavette mobile (21, 21') est reliée à un régleur de force centrifuge (24), **caractérisé en ce que** le régleur de force centrifuge (24) déplace la clavette mobile (21, 21') en fonction d'une vitesse de rotation de l'arbre d'entrée (16), dans lequel le régleur de force centrifuge (24) présente au moins un élément de force centrifuge (25, 25') déplaçable dans la direction radiale logé au niveau de l'arbre d'entrée (16), qui est en liaison active avec la clavette mobile (21, 21') par le biais d'un ensemble levier (26), et dans lequel un changement entre les rapports a lieu par une commande du groupe d'entraînement (2) de sorte que la boîte de vitesses (4) est sans charge.
